# EUROPEAN PATENT SPECIFICATION

(11) **EP 4 365 496 B1**
(45) Date of publication and mention of the grant of the patent: **06.08.2025**
(21) Application number: 23207834.5
(22) Date of filing: 06.11.2023
(51) Int. Cl.: F24C 15/34, A47J 37/06, F24C 15/36

(54) **ELECTRIC OVEN WITH SCALDING PREVENTION CASE**
ELEKTROBACKOFEN MIT VERBRÜHUNGSSCHUTZGEHÄUSE
FOUR ÉLECTRIQUE AVEC BOÎTIER ANTI-BRÛLURES

(30) Priority: 07.11.2022 CN 202222954175 U
(43) Date of publication of application: 08.05.2024
(73) Proprietor: Qingdao Genjoy Home Fashion Co., Ltd., Qingdao, Shandong 266000 (CN); QStoves Inc, Sammamish, WA 98074 (US)
(72) Inventor: WU, Xiaohui, Qingdao, Shandong (CN)
(74) Representative: Sun, Yiming

(56) References cited:
- EP-B1- 1 288 366
- WO-A1-2023/242534
- CN-A- 108 135 036
- CN-U- 204 600 182
- CN-U- 216 256 538
- CN-U- 217 243 903
- JP-A- 2021 122 196
- US-A- 4 416 249
- US-A1- 2007 284 272
- US-A1- 2020 088 413

## Description

### Technical Field

The present invention relates to the field of kitchen appliances, in particular to an electric oven.

### Background

An electric oven is a kind of appliance commonly used for food baking and having a wide range of uses. As baking equipment, the electric oven needs to heat up to work, and a part of the heat produced is transferred to the surface of the oven, so the user is at the risk of scalding. In the prior art, the thermal insulation mostly relies on the material of the oven, so the thermal insulation effect varies from material to material and is hard to be guaranteed. In addition, the ovens of prior art are used to bake the food by heating the internal space of the oven only, the food is not fully heated, so they may take a long time for baking and obtain unsatisfactory baking effect. Hence, an electric oven good in heat dissipation effect and food heating is needed. CN 108 135 036 A discloses electric heating equipment having no electric field radiation. JP 2021122196 A discloses an pizza oven comprising a conventional insulation layer.

### Summary of The Invention

In order to solve the problems in the background technology, an electric oven is provided, which includes an oven body and an oven door used for opening and closing the oven body, wherein, a group of heating devices are arranged in the upper portion and the lower portion of the interior of the oven body, separately; a heat-conducting plate is provided at the top of the heating devices located on the lower portion; and an outer wall of the oven body is sleeved with a silicon rubber case for preventing scalding.

Preferably, concave-convex textures are arranged on the surface of the silicon rubber case, supporting legs used for supporting the oven body are arranged at the outer bottom of the oven body, through holes are configured in positions, corresponding to the supporting legs, on the silicon rubber case, and the ends, away from the oven body, of the supporting legs pass through the silicon rubber case through the through holes.

Preferably, the heating devices are electric heating tubes, and the heat-conducting plate is a stone plate or a metal plate.

Preferably, the bottom surface of the heat-conducting plate is in contact with the heating devices located in the lower portion.

Preferably, the casings of the oven body and the oven door are made of double-layer metal plates, and a thermal insulation material is filled between the two layers of the metal plates.

Preferably, aluminum silicate is selected as the thermal insulation material.

Preferably, temperature detecting devices are provided inside the oven body, a power cable and a control panel are provided outside the oven body, the control panel is connected with the heating devices and the temperature detecting devices, and the power cable is connected with the control panel, the heating devices and the temperature detecting devices, respectively.

Preferably, the supporting legs are foldable, and the ends, closing to the oven body, of the supporting legs are rotatably connected with the oven body.

Preferably, an internal space of the oven body is flat, and a width L of the internal space of the oven body is three times (or more) a height S of the internal space of the oven body.

Preferably, the oven door is provided with a sight window and a handle, the sight window is located at the center of the oven door, and the handle is located up or below the sight window and installed on the side, away from the oven body, of the oven door.

**The** beneficial effects of the present invention are:
1. **The** present invention is provided with a silicon rubber case, which protects people from being scalded with low thermal conductivity. **The** concave-convex textures on the surface of the silicon rubber case increase the heat dissipation area, which is beneficial to the heat dissipation of the electric oven surface. Moreover, the supporting legs at the bottom of the oven body are capable of supporting the electric oven to keep a certain distance from the surface where the electric oven is placed, thus further improving the heat dissipation effect and securing the user.
2. The heating devices and the heat-conducting plate arranged in the present invention make the food heated evenly and enhance the baking effect, and the oven body designed in flat structure reduces the baking time and improves the baking efficiency.
3. The casings of the oven body and the oven door of the present invention are made of double-layer metal plates, and a thermal insulation material is filled between the two layers of the metal plates, so that the oven experiences a sharper increase in internal temperature and an improved thermal insulation performance.

### Brief Description of the Drawings

Fig. 1 is a schematic diagram of the overall structure of the present invention;
Fig. 2 is a schematic diagram of the internal structure of the present invention;
Fig. 3 is a schematic diagram of the present invention after disassembly of the silicon rubber case.

Numerals in the figures: 1 - oven body, 2 - oven door, 21 - handle, 22 - sight window, 3 - heating device, 4 - heat-conducting plate, 5 - silicone rubber case, 51 - through hole, 6 - supporting leg.

### Detailed Description of the Preferred Embodiments

In order to make the object, technical solution and advantages of the present invention clearer, the present invention is further described in detail in combination with the description of drawings and embodiments. It should be understood that specific embodiments described herein are only used to explain the present invention rather than define the present invention.

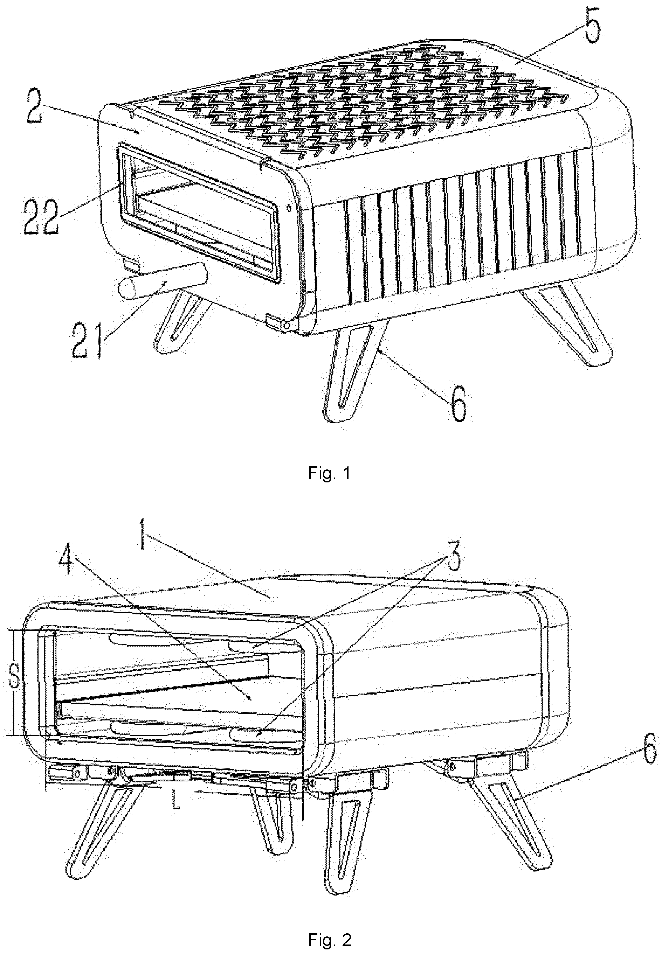

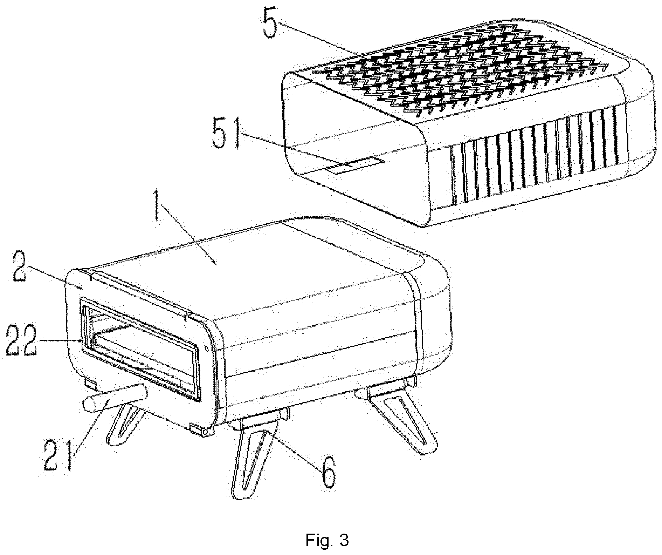

Referring to Figs. 1 and 3, an electric oven is provided, including an oven body 1 and an oven door 2 used for opening and closing the oven body 1. A group of heating devices 3 are arranged in the upper portion and the lower portion of the interior of the oven body 1, separately. A heat-conducting plate 4 is provided at the top of the heating devices 3 located on the lower portion. An outer wall of the oven body 1 is sleeved with a silicon rubber case 5, and concave-convex textures are arranged on the surface of the silicon rubber case 5. Supporting legs 6 used for supporting the oven body 1 are arranged at the outer bottom of the oven body 1. Through holes 51 are configured in positions, corresponding to the supporting legs 6, on the silicon rubber case 5, and the ends, away from the oven body 1, of the supporting legs 6 pass through the silicon rubber case 5 through the through holes 51.

More specifically, the silicon rubber case 5 is resistant to high temperature and heat insulated, and protects people from being scalded. **The** concave-convex textures on the surface of the silicon rubber case 5 increase the surface area of the silicon rubber case 5, thus further increasing the heat dissipation area of the silicon rubber case 5. When the electric oven is used for prolonged heating, a part of heat will be transferred to the surface of the oven, and the silicon rubber case 5 with the concave-convex textures plays the role of thermal insulation and dissipates the part of heat gradually to decrease the surface temperature of the oven.

The silicon rubber case 5 is an elastic sleeve, which is designed to match the shape of the outer wall of the oven body 1. The silicon rubber case 5 needs to be smaller than the oven body 1 in size, so as to avoid the situation that the silicone rubber case 5 is loose and easy to fall off from the oven body 1.

The concave-convex textures may be points, lines, patterns, designs and so on.

Specifically, the heating devices 3 are electric heating tubes that are used as the heat source of the electric oven. The heat-conducting plate 4 is made of heat-resistant materials such as a stone plate or a metal plate, and has the characteristics of quick heat conduction and uniform heating.

Specifically, the bottom surface of the heat-conducting plate 4 is in contact with the heating devices 3 located in the lower portion, so that the heat of the heating devices 3 in the lower portion is directly transferred to the heat-conducting plate 4, and the temperature of the heat-conducting plate 4 is uniformly increased by heating the heat-conducting plate 4. In this way, the food is heated more evenly and the baking effect is improved.

Specifically, the casings of the oven body 1 and the oven door 2 are made of double-layer metal plates, and the metal plates may be made of stainless steel, and a thermal insulation material is filled between the two layers of the metal plates to form a thermal insulation layer, so that the oven body 1 experiences a sharper increase in internal temperature, non-easily dissipated heat and an improved thermal insulation performance.

Specifically, aluminum silicate, also known as ceramic fiber, is selected as the thermal insulation material. Aluminum silicate is non-toxic and odourless, and suitable for being used as the thermal insulation layer of the oven. Other thermal insulation materials with safe properties are also available, and the food safety should be guaranteed on the premise of ensuring the thermal insulation effect.

Specifically, temperature detecting devices are provided inside the oven body 1, a power cable and a control panel are provided outside the oven body 1, the control panel is connected with the heating devices 3 and the temperature detecting devices, and the power cable is connected with the control panel, the heating devices 3 and the temperature detecting devices, respectively. The control panel is used for turning on/off the oven, and presetting the temperature of the heating tubes and the heating duration.

Specifically, the supporting legs 6 are foldable, and the ends, closing to the oven body 1, of the supporting legs 6 are rotatably connected with the oven body 1. To use the oven, the supporting legs 6 are unfolded to support the oven and keep a certain distance from the surface where the oven is placed to facilitate heat dissipation. After use, the supporting legs 6 may be folded to minimize the space occupied.

Specifically, an internal space of the oven body 1 is flat, and a width L of the internal space of the oven body 1 is three times (or more) a height S of the internal space of the oven body 1, so that the baking duration is shortened. In addition, the flat design of the internal space is mainly suitable for baking pizza, pancake, steak, chicken wings and other flat foods, which are cooked faster than foods in other shapes using the oven.

Specifically, the oven door 2 is provided with a sight window 22 and a handle 21, the sight window 22 is located at the center of the oven door 2, and the handle 21 is installed on the side, away from the oven body 1, of the oven door 2.

The embodiments of the present invention are described in detail in combination with the description of drawings. It should be understood that only preferred embodiments of the present invention are described above, but the present invention is not limited thereto, but only limited by the scope of the appended claims.

## Claims

1. An electric oven, comprising an oven body (1) and an oven door (2) used for opening and closing the oven body (1), wherein, a group of heating devices (3) are arranged in the upper portion and the lower portion of the interior of the oven body (1), separately, wherein a heat-conducting plate (4) is provided at the top of the heating devices (3) located on the lower portion; **characterized in that** an outer wall of the oven body (1) is sleeved with a silicon rubber case (5) for preventing scalding.

2. The electric oven according to claim 1, **characterized in that** concave-convex textures are arranged on the surface of the silicon rubber case (5), supporting legs (6) used for supporting the oven body (1) are arranged at the outer bottom of the oven body(1), through holes (51) are configured in positions, corresponding to the supporting legs (6), on the silicon rubber case (5), and the ends, away from the oven body (1), of the supporting legs (6) pass through the silicon rubber case (5) through the through holes (51).

3. The electric oven according to claim 1, **characterized in that** the heating devices (3) are electric heating tubes, and the heat-conducting plate (4) is a stone plate or a metal plate.

4. The electric oven according to claim 1, **characterized in that** the bottom surface of the heat-conducting plate (4) is in contact with the heating devices (3) located in the lower portion.

5. The electric oven according to claim 1, **characterized in that** the casings of the oven body (1) and the oven door (2) are made of double-layer metal plates, and a thermal insulation material is filled between the two layers of the metal plates.

6. The electric oven according to claim 5, **characterized in that** aluminum silicate is selected as the thermal insulation material.

7. The electric oven according to claim 1, **characterized in that** a temperature detecting devices is provided inside the oven body (1), a power cable and a control panel are provided outside the oven body (1), the control panel is connected with the heating devices (3) and the temperature detecting devices, and the power cable is connected with the control panel, the heating devices (3) and the temperature detecting devices, respectively.

8. The electric oven according to claim 2, **characterized in that** the supporting legs (6) are foldable, and the ends, closing to the oven body (1), of the supporting legs (6) are rotatably connected with the oven body (1).

9. The electric oven according to claim 1, **characterized in that** an internal space of the oven body (1) is flat, and a width L of the internal space of the oven body (1) is three times (or more) a height S of the internal space of the oven body (1).

10. The electric oven according to claim 1, **characterized in that** the oven door (2) is provided with a sight window (22) and a handle (21), and the handle is installed on the side, away from the oven body (1), of the oven door (2).

## Patentansprüche

1. Elektrischer Ofen, umfassend ein Ofengehäuse (1) und eine Ofentür (2) zum Öffnen und Schließen des Ofengehäuses (1), wobei jeweils eine Gruppe von Heizeinrichtungen (3) im oberen Bereich und im unteren Bereich des Innenraums des Ofengehäuses (1) getrennt angeordnet ist, wobei eine wärmeleitende Platte (4) über den im unteren Bereich angeordneten Heizeinrichtungen (3) vorgesehen ist; **dadurch gekennzeichnet, dass** eine Außenwand des Ofengehäuses (1) mit einer Silikongummihülle (5) ummantelt ist, die dem Verbrühungsschutz dient.

2. Elektrischer Ofen nach Anspruch 1, **dadurch gekennzeichnet, dass** auf der Oberfläche der Silikongummihülle (5) konkav-konvexe Strukturen vorgesehen sind, dass Stützfüße (6) zum Tragen des Ofengehäuses (1) an der äußeren Unterseite des Ofengehäuses (1) angeordnet sind, dass Durchgangsöffnungen (51) an Positionen der Silikongummihülle (5) vorgesehen sind, die den Stützfüßen (6) entsprechen, und dass die dem Ofengehäuse (1) abgewandten Enden der Stützfüße (6) die Silikongummihülle (5) durch die Durchgangsöffnungen (51) hindurch durchdringen.

3. Elektrischer Ofen nach Anspruch 1, **dadurch gekennzeichnet, dass** die Heizeinrichtungen (3) elektrische Heizrohre sind und dass die wärmeleitende Platte (4) eine Steinplatte oder eine Metallplatte ist.

4. Elektrischer Ofen nach Anspruch 1, **dadurch gekennzeichnet, dass** die Unterseite der wärmeleitenden Platte (4) mit den im unteren Bereich angeordneten Heizeinrichtungen (3) in Kontakt ist.

5. Elektrischer Ofen nach Anspruch 1, **dadurch gekennzeichnet, dass** die Gehäuse des Ofengehäuses (1) und der Ofentür (2) aus doppelwandigen Metallplatten bestehen und dass ein wärmeisolierendes Material zwischen den beiden Lagen der Metallplatten eingefüllt ist.

6. Elektrischer Ofen nach Anspruch 5, **dadurch gekennzeichnet, dass** als wärmeisolierendes Material Aluminiumsilikat ausgewählt ist.

7. Elektrischer Ofen nach Anspruch 1, **dadurch gekennzeichnet, dass** im Inneren des Ofengehäuses (1) eine Temperaturerfassungseinrichtung vorgesehen ist, dass außerhalb des Ofengehäuses (1) ein Netzkabel und ein Bedienfeld vorgesehen sind, dass das Bedienfeld mit den Heizeinrichtungen (3) und der Temperaturerfassungseinrichtung verbunden ist und dass das Netzkabel jeweils mit dem Bedienfeld, den Heizeinrichtungen (3) und der Temperaturerfassungseinrichtung verbunden ist.

8. Elektrischer Ofen nach Anspruch 2, **dadurch gekennzeichnet, dass** die Stützfüße (6) klappbar sind und dass die dem Ofengehäuse (1) zugewandten Enden der Stützfüße (6) drehbar mit dem Ofengehäuse (1) verbunden sind.

9. Elektrischer Ofen nach Anspruch 1, **dadurch gekennzeichnet, dass** ein Innenraum des Ofengehäuses (1) flach ist und dass eine Breite L des Innenraums des Ofengehäuses (1) mindestens das Dreifache (oder mehr) einer Höhe S des Innenraums des Ofengehäuses (1) beträgt.

10. Elektrischer Ofen nach Anspruch 1, **dadurch gekennzeichnet, dass** die Ofentür (2) mit einem Sichtfenster (22) und einem Griff (21) versehen ist und dass der Griff an der dem Ofengehäuse (1) abgewandten Seite der Ofentür (2) angebracht ist.

## Revendications

1. Un four électrique, comprenant un corps de four (1) et une porte de four (2) utilisée pour ouvrir et fermer le corps de four (1), dans lequel un groupe de dispositifs de chauffage (3) est agencé séparément dans la partie supérieure et la partie inférieure de l'intérieur du corps de four (1), et une plaque conductrice de chaleur (4) est disposée au-dessus des dispositifs de chauffage (3) situés dans la partie inférieure ; **caractérisé en ce que** une paroi extérieure du corps de four (1) est entourée d'un boîtier en caoutchouc de silicone (5) destiné à prévenir les brûlures.

2. Le four électrique selon la revendication 1, **caractérisé en ce que** des structures en relief et en creux sont formées sur la surface du boîtier en caoutchouc de silicone (5), des pieds de support (6) utilisés pour supporter le corps de four (1) sont disposés au fond extérieur du corps de four (1), des orifices traversants (51) sont agencés à des positions correspondant aux pieds de support (6) sur le boîtier en caoutchouc de silicone (5), et les extrémités, opposées au corps de four (1), des pieds de support (6) traversent le boîtier en caoutchouc de silicone (5) à travers les orifices traversants (51).

3. Le four électrique selon la revendication 1, **caractérisé en ce que** les dispositifs de chauffage (3) sont des tubes de chauffage électriques, et la plaque conductrice de chaleur (4) est une plaque en pierre ou une plaque métallique.

4. Le four électrique selon la revendication 1, **caractérisé en ce que** la surface inférieure de la plaque conductrice de chaleur (4) est en contact avec les dispositifs de chauffage (3) situés dans la partie inférieure.

5. Le four électrique selon la revendication 1, **caractérisé en ce que** les enveloppes du corps de four (1) et de la porte de four (2) sont réalisées en plaques métalliques à double couche, et un matériau isolant thermique est inséré entre les deux couches des plaques métalliques.

6. Le four électrique selon la revendication 5, **caractérisé en ce que** le matériau isolant thermique est choisi comme étant du silicate d'aluminium.

7. Le four électrique selon la revendication 1, **caractérisé en ce qu'**un dispositif de détection de température est prévu à l'intérieur du corps de four (1), un câble d'alimentation et un panneau de commande sont prévus à l'extérieur du corps de four (1), le panneau de commande étant connecté aux dispositifs de chauffage (3) et au dispositif de détection de température, et le câble d'alimentation étant connecté respectivement au panneau de commande, aux dispositifs de chauffage (3) et au dispositif de détection de température.

8. Le four électrique selon la revendication 2, **caractérisé en ce que** les pieds de support (6) sont repliables, et les extrémités, orientées vers le corps de four (1), des pieds de support (6) sont reliées de manière rotative au corps de four (1).

9. Le four électrique selon la revendication 1, **caractérisé en ce qu'**un espace intérieur du corps de four (1) est plat, et une largeur L de l'espace intérieur du corps de four (1) est au moins trois fois (ou plus) une hauteur S de l'espace intérieur du corps de four (1).

10. Le four électrique selon la revendication 1, **caractérisé en ce que** la porte de four (2) est pourvue d'une fenêtre de visualisation (22) et d'une poignée (21), et la poignée est installée sur le côté de la porte de four (2) opposé au corps de four (1).
